# EUROPÄISCHE PATENTSCHRIFT

(11) **EP 0 548 610 B1**
(45) Veröffentlichungstag und Bekanntmachung des Hinweises auf die Patenterteilung: **13.03.1996**
(21) Anmeldenummer: 92120599.3
(22) Anmeldetag: 03.12.1992
(51) Int. Cl.: H02K 11/00

(54) **Elektromotor mit einem Thermoschutzschalter**
Electric motor with thermal protection switch
Moteur électrique avec interrupteur de protection thermique

(30) Priorität: 20.12.1991 DE 4142180
(43) Veröffentlichungstag der Anmeldung: 30.06.1993
(73) Patentinhaber: Licentia Patent-Verwaltungs-GmbH, D-60596 Frankfurt (DE)
(72) Erfinder: Appeldorn, Alfred, Dipl.-Ing., W-2904 Hatten (DE); Hadeler, Dieter, Dipl.-Ing., W-2900 Oldenburg (DE); Pöpelt, Bernhard, W-2900 Oldenburg (DE)
(74) Vertreter: Vogl, Leo, Dipl.-Ing.

(56) Entgegenhaltungen:
- DE-A- 3 534 883
- DE-A- 3 625 109
- DE-U- 9 004 943
- FR-A- 2 312 133
- GB-A- 1 326 209
- US-A- 3 395 297
- PATENT ABSTRACTS OF JAPAN vol. 013, no. 496 (E-843)9. November 1989 & JP-A- 1198244

## Beschreibung

Die Erfindung betrifft einen Elektromotor mit einem Thermoschutzschalter der im Oberbegriff des Patentanspruchs angegebenen Art.

Es ist allgemein üblich, Elektromotore mit einem Schutzschalter zu versehen, der nah oder innerhalb der Feldwicklung angeordnet ist und das Feld bei Überstrom oder unzulässiger Erwärmung abschaltet. Hierbei werden Thermoschutzschalter dieser Art häufig in gekapseltem Zustand in die Motorwicklung eingefügt, siehe DE 39 40 257 A1.

Aus Gründen des relativ großen Volumens bei entsprechenden Strombelastungen im Ansprechfall sowie auch aus Kostengründen wurde gemäß DE 87 09 261 U1 ein ungekapselter Thermoschutzschalter eingesetzt, welcher mittels eines Klemmstückes zwischen den Wicklungen und einer vorbestimmten Lage fixiert ist. Der Thermoschutzschalter steht hierbei aber nicht in unmittelbarer wärmeschlüssiger Verbindung mit der Wicklung im Stator.

Weiterhin ist durch die DE 36 25 109 A1 ein Stator für Induktionsmotoren bekannt, wobei ein Thermoschalter in einer Halterung mit einem zum Wickelkopf hin geöffneten Einsteckschlitz verrastbar angeordnet ist und wobei die Halterung ein federndes Element aufweist, durch das die Kontaktfläche des Thermoschalters gegen die Windungen des Wickelkopfes preßbar ist.

Der Erfindung liegt nun die Aufgabe zugrunde, einen Elektromotor mit mindestens zwei ausgeprägten, eine Wicklung tragenden Ständerpolen sowie mit mindestens einem der Feldwicklung zugeordneten Thermoschutzschalter zu schaffen, bei dem der Thermoschutzschalter aus einfachen und leicht zu montierenden Einzelteilen besteht, exakt zu dem Wickelkopf in dem Stator positionierbar und selbst bei Schwankungen der Kupferwickelkopfhöhe sicher mit einer definierten Kontaktfläche in wärmeschlüssiger Verbindung mit der Wicklung bringbar ist. Diese Aufgabe wird durch die im Patentanspruch 1 gekennzeichneten Merkmale gelöst.

Der Thermoschutzschalter weist ein Gehäuse auf, welches eine einfache Montage in eine definierte Einbaulage zu der Wicklung in dem Stator gewährleistet. Hierbei kommt der Thermoschutzschalter stets mit einer definierten Kontaktfläche des Wickelkopfes in Berührung, wobei das eigentliche Gehäuse des Thermoschutzschalters durch einen Wärmeschrumpfschlauch von dem Wickelkopf isoliert ist. Eine sichere wärmeschlüssige Berührung des Thermoschutzschalters mit der Wicklung wird selbst bei Schwankungen der Wickelkopfhöhe durch einen elastischen Arm des Gehäuses ausgeglichen.

Weitere vorteilhafte Ausgestaltungen des Erfindungsgegenstandes sind den weiteren Unteransprüchen zu entnehmen.

Die Erfindung wird anhand von Ausführungsbeispielen im folgenden näher beschrieben. Es zeigen:
- Figur 1: eine Seitenansicht auf einen Stator eines Elektromotors,
- Figur 2: eine Einzelheit aus Figur 1 im Schnitt,
- Figur 3: Gehäuse mit dem Thermoschutzschalter vor der Verbindung mit dem Stator,
- Figur 4: eine Einzelheit aus Figur 3 im Schnitt,
- Figur 5: eine Draufsicht auf den Thermoschutzschalter im Gehäuse,
- Figur 6: Thermoschutzschalter mit einem Wärmeschrumpfschlauch,
- Figur 7: Verbindung des Thermoschutzschalters mit der Wicklung mittels eines Kabelbinders und
- Figur 8: Einzelheiten des Kabelbinders.

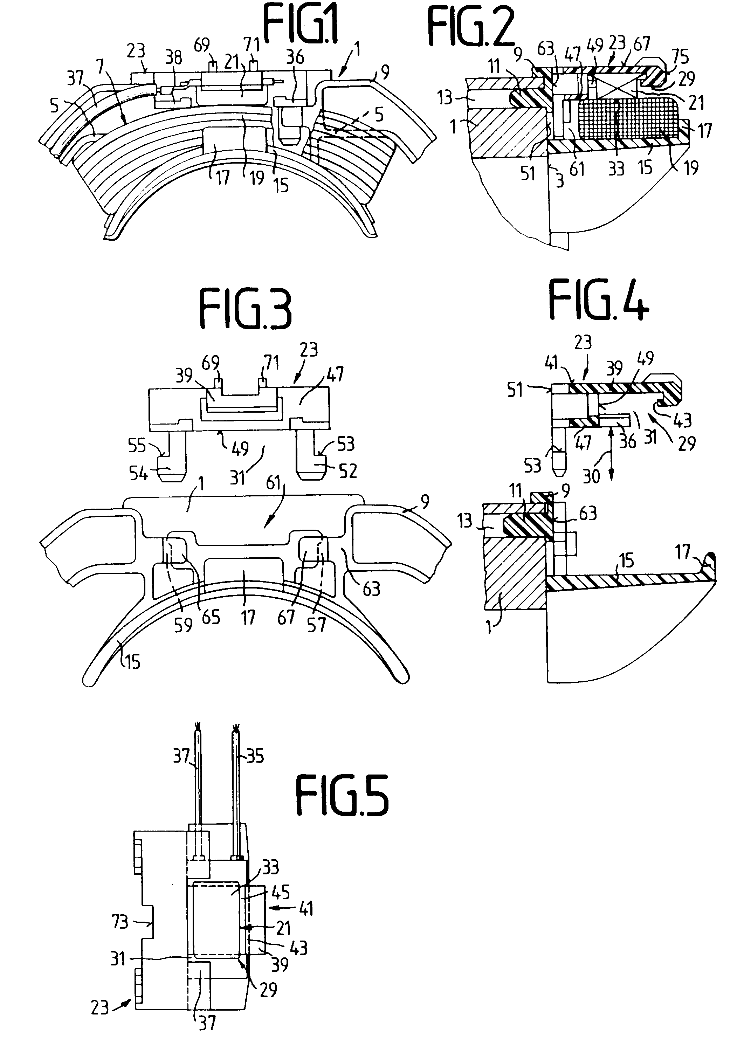

In der Figur 1 ist die Teilansicht eines Ständerblechpaketes 1 eines Elektromotors von dessen Stirnseite 3 her gesehen dargestellt, wobei der Elektromotor zwei ausgeprägte Pole 5, die Wicklungen 7 tragen, aufweist. In dieser Figur 1 ist jeweils nur ein Pol 5 und eine Wicklung 7 dargestellt. Die Stirnfläche 3 des Ständerblechpaketes ist mit einer Endscheibe 9 aus einem Isolierwerkstoff verbunden, wobei diese Endscheibe 9 mit einem Arretierzapfen 11 in eine Rastbohrung 13 einrastbar gelagert ist. Andererseits weist die Endscheibe 9 einen Stützarm 15 für den über die Stirnfläche 3 des Ständerblechpaketes 1 hinausragenden Wickelkopf 19 der Wicklung 7 auf. Der Stützarm 15 ist an seinem freien Ende noch mit einer Abwinkelung 17 versehen, durch die ein Abfallen der einzelnen Windungen des Wickelkopfes 19 von diesem Stützarm 15 sicher verhindert wird. Um den Elektromotor bei Überstrom im Feld und/oder unzulässiger Erwärmung abschalten zu können, steht der Wickelkopf 19 der Wicklung 7 mit einem Thermoschutzschalter 21 in wärmeschlüssiger Verbindung.

Der Thermoschutzschalter 21 befindet sich in einer Halterung 23, welche zur Aufnahme des von einem Wärmeisolierschlauch 25 umgebenden Gehäuse 27 des Thermoschutzschalters 21 mit einem zum Wickelkopf 19 hin geöffneten Einsteckschlitz 29 versehen ist. Übrigens wird der Thermoschutzschalter 21 mit seiner in einer Öffnung 31 des Einsteckschlitzes 29 angeordneten Kontaktfläche 33 sicher gegen den Wickelkopf 19 derart gedrückt, daß z. B. bei unzulässigen Erwärmungen des Elektromotors ein Schaltimpuls über die Steuerleitungen 35, 37 an eine Steuervorrichtung für den Elektromotor zu dessem Abschalten sicher geleitet wird. Der Einsteckschlitz 29 weist auf der Vorderseite 30 neben der Öffnung 31 für die Kontaktfläche 33 des Thermoschutzschalters 21 bodenseitig zwei Stütznasen 36, 38 auf, gegen welche der Thermoschutzschalter 21 mittels einer federnden Zunge 39 in der Rückwand 41 des Einsteckschlitzes 29 preßbar ist. Diese federnde Zunge 39 bildet die Rückwand 41 des Einsteckschlitzes 29 und umgreift formschlüssig mit einem an ihrem freien Ende angeordneten Rasthaken 43 den umlaufenden Rand 45 des Thermoschutzschalters 21. Die Zunge 39 hat eine Breite, die kleiner ist als der freie Abstand zwischen den Stütznasen 36, 38 an der Vorderseite 30 des Einsteckschlitzes 29.

Die aus einem Kunststoffspritzteil bestehende Halterung 23 besteht aus einer Traverse 47, an deren Oberseite 49 der Einsteckschlitz 29 und an deren Bodenfläche 51 Rastarme 52, 54 mit Rasthaken 53, 55 angeformt sind, welche beim Befestigen der Halterung 23 mit dem Ständerblechpaket 1 Vorsprünge 57, 59 an dem Stator formschlüssig hintergreifen. Diese Vorsprünge 57, 59 befinden sich an der Endscheibe 9. Übrigens ist die Halterung 23 zum Befestigen in einem Zwischenraum 61 zwischen dem Wickelkopf 19 und der Endscheibe 9 einschieb- und wie oben beschrieben verrastbar. Hierbei wird die Bodenfläche 51 der Halterung 23 gegen die Außenoberfläche 63 der mit dem Ständerblechpaket 1 mittels Arretierzapfen 11 verbundenen Endscheibe 9 beim Verrasten gepreßt. Um die Halterung 23 auch nach dem Verrasten senkrecht zu ihrer Einschubrichtung axial zu sichern, weist die Endscheibe 9 von ihrer Oberfläche 63 mit Abstand angeordnete Arretiernasen 65, 67 auf, die als Abwinkelungen an den freien Enden der Vorsprünge 57, 59 angeordnet sind. Durch die federnde Zunge 39 an der Halterung 23 wird die Kontaktfläche 33 des Thermoschutzschalters 21 mit dem Wickelkopf 19 auch bei Schwankungen in der Wickelkopfhöhe sicher in wärmeschlüssiger Verbindung gehalten.

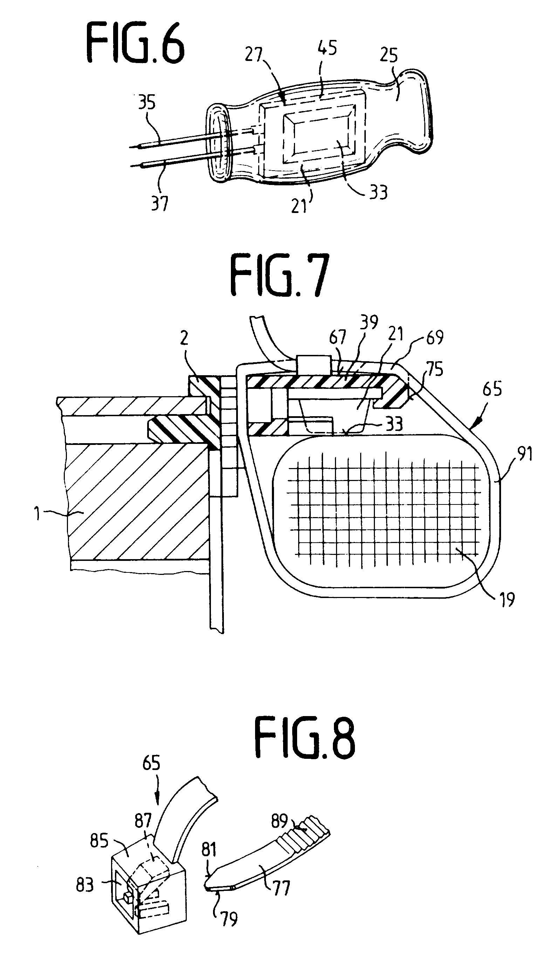

Eine vielseitige Verwendbarkeit des Thermoschutzschalters 21 mit der Halterung 23 ist dadurch gegeben, daß der Thermoschutzschalter 21 mittels eines die Halterung 23 und den Wickelkopf 19 umschließenden Kabelbinders 65 gegen den Wickelkopf 19 preßbar ist. In diesem Fall braucht die Halterung 23 nicht mit der Endscheibe 9 verrastet zu werden, aber dafür weist die Halterung 23 Führungs- und Arretiermittel für den laschenartigen Kabelbinder 65 auf, siehe Figur 7. Zu diesem Zweck weist die Außenoberfläche 67 der federnden Zunge 39 zwei mit Abstand zueinander angeordnete Führungsstege 69, 71 und die Bodenfläche der Traverse 47 eine eingearbeitete Führungsnut 73 als Führungsmittel für den Kabelbinder 65 auf. Diese Führungsstege 69, 71 sind an der Übergangsstelle der Außenoberfläche 67 zu der Stirnfläche 75 der federnden Zunge 39 angeordnet.

Auch hierdurch wird eine einfache Verbindung des Thermoschutzschalters 21 mit dem Wickelkopf 19 erzielt, wobei außerdem die Kontaktfläche 33 des Thermoschutzschalters 21 sicher in Eingriff mit der Wicklung gehalten wird.

Der Kabelbinder 65 ist an einem Ende 77 zungenartig mit zu einer Spitze zusammen laufenden Einfädelungsschrägen 79, 81 für einen Durchtrittsschlitz 83 eines Verschlußelementes 85 versehen. In diesem Durchtrittsschlitz 83 ist ein federnder Rastzahn 87 angeordnet, welcher in eine Verzahnung 89 an dem Kabelbinder 65 derart einrastbar ist, daß die den Wickelkopf 19 umschließende Schlaufe 91 des Kabelbinders 65 sich nicht mehr vergrößern bzw. öffnen kann.

## Patentansprüche

1. Elektromotor mit mindestens zwei ausgeprägten, eine Wicklung tragenden Ständerpolen sowie mit mindestens einem der Feldwicklung zugeordneten Thermoschutzschalter (21), welcher in einer Halterung (23) mit einem zum Wickelkopf (19) hin geöffneten Einsteckschlitz (29) verrastbar angeordnet ist, wobei die Halterung (23) ein federndes Element aufweist, durch das die Kontaktfläche (33) des Thermoschutzschalters (21) gegen die Windungen des Wickelkopfes (19) preßbar ist, **dadurch gekennzeichnet**, daß der Einsteckschlitz (29) auf der Vorderseite (30) neben der Öffnung (31) für die Kontaktfläche (33) des Thermoschutzschalters (21) bodenseitig zwei Stütznasen (36, 38) aufweist, gegen welche der Thermoschutzschalters (21) mittels einer federnden Zunge (39) in der Rückwand (41) des Einsteckschlitzes (29) preßbar ist, und daß die federnde Zunge (39) an ihrem freien Ende einen Rasthaken (43) aufweist, der einen umlaufenden Rand (45) an dem Thermoschutzschalter (21) formschlüssig umgreift.

2. Elektromotor nach Anspruch 1, **dadurch gekennzeichnet**, daß die federnde Zunge (39) die Rückwand (41) des Einsteckschlitzes (29) bildet und eine Breite aufweist, die kleiner als der freie Abstand zwischen den Stütznasen (36, 38) an der Vorderseite (30) des Einsteckschlitzes (29) ist.

3. Elektromotor nach einem der vorhergehenden Ansprüche, **dadurch gekennzeichnet**, daß die aus Kunststoff bestehende Halterung (23) eine Traverse (47) aufweist, mit deren Oberseite (49) der Einsteckschlitz (29) einstückig ausgebildet ist und an deren Bodenfläche (51) seitlich Rasthaken (55, 53) angeformt sind, welche beim Befestigen der Halterung (23) mit dein Ständerblechpaket (1) Vorsprünge (57, 59) an dem Stator formschlüssig hintergreifen.

4. Elektromotor nach Anspruch 3, wobei zwischen dem Blechpaket des Stators und den die beiden Stirnseiten dieses Blechpaketes überragenden Wickelköpfe der gewickelten Ständerwicklung je eine aus einem Isolierwerkstoff bestehende Endscheibe angeordnet ist und wobei die Endscheiben Stützflächen für die Wickelköpfe aufweisen, **dadurch gekennzeichnet**, daß die Halterung (23) in einen Zwischenraum zwischen dem Wickelkopf (19) und der Endscheibe (9) einschieb- und mit Rastnasen (53, 55) hinter Vorsprünge (57, 59) an der Endscheibe (9) verrastbar ist.

5. Elektromotor nach Anspruch 4, **dadurch gekennzeichnet**, daß die Halterung (23) mit der Bodenfläche (51) auf der Außenoberfläche (63) der mit dem Blechpaket (1) verbundenen Endscheibe (9) preß- und verrastbar ist.

6. Elektromotor nach Anspruch 5, **dadurch gekennzeichnet,** daß die Endscheibe (9) von ihrer Oberfläche (63) mit Abstand angeordnete Arretiernasen (65, 67) aufweist, durch welche die Rastarme (52, 54) und damit die Halterung (23) senkrecht zur Einschubrichtung der Halterung (23) arretierbar sind.

7. Elektromotor nach einem der vorhergehenden Ansprüche, **dadurch gekennzeichnet**, daß der Thermoschutzschalter (21) mittels eines die Halterung (23) und den Wicklungskopf (19) umschließenden Kabelbinders (65) gegen die Wicklung preßbar ist.

8. Elektromotor nach Anspruch 7, **dadurch gekennzeichnet**, daß die Halterung (23) Führungs- und Arretiermittel für den laschenartigen Kabelbinder (65) aufweist.

9. Elektromotor nach Anspruch 8, **dadurch gekennzeichnet**, daß die Führungsmittel aus an dem oberen freien Ende der Außenoberfläche (67) der federnden Zunge (39) angeordneten Führungsstegen (69, 71) und aus einer in die Bodenfläche der Traverse (47) der Halterung (23) eingearbeitete Führungsnut (73) bestehen.

10. Elektromotor nach Anspruch 9, **dadurch gekennzeichnet**, daß die Führungsstege (69, 71) an der Übergangsstelle der Außenoberfläche (67) zu der Stirnfläche (75) der federnden Zunge (39) angeordnet sind.

## Claims

1. Electric motor with at least two salient stator poles carrying a winding as well as with at least one thermal protective switch (21), which is associated with the field winding and which is arranged to be detentable in a holder (23) with a plug-in slot (29) open towards the winding head (19), wherein the holder (23) comprises a resilient element by which the contact surface (33) of the thermal protective switch (21) is pressable against the windings of the winding head (19), characterised thereby that the plug-in slot (29) has on the front side (30), apart from the opening (31) for the contact surface (33) of the thermal protective switch (21), at both sides two support lugs (36, 38) against which the thermal protective switch (21) is pressable by means of a resilient tongue (39) in the back wall (41) of the plug-in slot (29), and that the resilient tongue (39) has at its free end a detent hook (43) which engages in shape-locking manner around an encircling rim (45) at the thermal protective switch (21).

2. Electric motor according to claim 1, characterised thereby that the resilient tongue (39) forms the back wall (41) of the plug-in slot (29) and has a width which is smaller than the clear gap between the support lugs (36, 38) at the front side of the plug-in slot (29).

3. Electric motor according to one of the preceding claims, characterised thereby that the holder (23) consisting of synthetic material comprises a cross member (47), with the upper side (49) of which the plug-in slot (29) is integrally constructed and at the base surface (51) of which lateral detent hooks (55, 53) are shaped on, which hooks engage in shape-locking manner behind projections (57, 59) of the stator on fastening of the holder (23) to the stator lamination body (1).

4. Electric motor according to claim 3, wherein a respective end disc consisting of an insulating material is arranged between the lamination body of the stator and the winding heads, which project at the two end faces of this lamination body, of the wound stator winding and wherein the end discs have support surfaces for the winding heads, characterised thereby that the holder (23) is insertable, and detentable by detent lugs (53, 55) behind projections (57, 59) at the end disc (9), in an intermediate space between the winding head (19) and the end disc (9).

5. Electric motor according to claim 4, characterised thereby that the holder (23) is pressable and detentable by the base surface (51) on the outer surface (63) of the end disc (9) connected with the lamination body (1).

6. Electric motor according to claim 5, characterised thereby that the end disc (9) has locking lugs (65, 67), by which the detent arms (52, 54) and thus the holder (23) are lockable perpendicularly to the direction of insertion of the holder (23), arranged at a spacing from its surface (63).

7. Electric motor according to one of the preceding claims, characterised thereby that the thermal protective switch (21) is pressable against the winding by means of a cable tie (65) encircling the holder (23) and the winding head (19).

8. Electric motor according to claim 7, characterised thereby that the holder (23) has guide and locking means for the strap-like cable tie (65).

9. Electric motor according to claim 8, characterised thereby that the guide means consist of guide webs (69, 71) arranged at the upper free end of the outer surface (67) of the resilient tongue (39) and of a guide groove (73) machined into the base surface of the cross member (47) of the holder (23).

10. Electric motor according to claim 9, characterised thereby that the guide webs (69, 71) are arranged at the transition locations of the outer surface (67) to the end surface (75) of the resilient tongue (39).

## Revendications

1. Moteur électrique comprenant au moins deux pôles de stator saillants, portant une bobine ainsi qu'au moins un commutateur de sécurité calorifuge (21) associé à la bobine de champ qui s'emboîte dans une fixation (23) par une fente d'insertion (29) ouverte en direction de la tête de bobine (19), la fixation (23) présentant un élément de ressort qui presse la surface de contact (33) du commutateur de sécurité calorifuge (21) contre les enroulements de la tète de bobine (19), caractérisé en ce que la fente d'insertion (29) présente, sur la face avant (30) à côté de l'ouverture (31) pour la surface de contact (33) du commutateur de sécurité calorifuge (21), côté fond deux ergots d'appui (36, 38) contre lesquels est comprimé le commutateur de sécurité calorifuge (21) au moyen d'une languette élastique (39) ménagée dans la paroi arrière (41) de la fente d'insertion (29) et en ce que la languette élastique (39) présente, sur son extrémité libre, un cran d'arrêt (43) qui encercle, par complémentarité des formes, un bord périphérique (45) du commutateur de sécurité calorifuge (21).

2. Moteur électrique selon la revendication 1, caractérisé en ce que la languette élastique (39) forme la paroi arrière (41) de la fente d'insertion (29) et présente une largeur qui est inférieure à l'espace libre entre les ergots d'appui (36, 38) sur la face avant (30) de la fente d'insertion (29).

3. Moteur électrique selon l'une des revendications précédentes, caractérisé en ce que la fixation (23) en matière plastique présente une traverse (47) dont la face supérieure (49) est formée d'une seule pièce avec la fente d'insertion (29) et dans la surface de fond (51) de laquelle sont moulés, sur le côté, des crans d'arrêt (55, 53) qui, à la mise en place de la fixation (23) avec le paquet de tôle de stator (1), s'enclenchent par complémentarité de formes derrière des saillies (57, 59) du stator.

4. Moteur électrique selon la revendication 3, dans lequel deux disques d'extrémités en matière isolante sont disposés entre le paquet de tôles du stator et les têtes de bobine de l'enroulement de stator enroulé, qui font saillie au-dessus des deux faces frontales de ce paquet de tôles, les deux disques d'extrémités présentant des surfaces d'appui pour les têtes de bobine, caractérisé en ce que la fixation (23) est insérée dans un espace entre la tête de bobine (19) et le disque d'extrémité (9) et s'emboîte à l'aide de crans d'arrêt (53, 55) derrière des saillies (57, 59) sur le disque d'extrémité (9).

5. Moteur électrique selon la revendication 4, caractérisé en ce que la fixation (23) est comprimée et s'emboîte avec la surface de fond (51) sur la surface externe (63) du disque d'extrémité (9) relié au paquet de tôle (1).

6. Moteur électrique selon la revendication 5, caractérisé en ce que le disque d'extrémité (9) présente des ergots de blocage (65, 67) disposés à distance de sa surface (63) qui permettent de bloquer les bras d'encliquetage (52, 54) et ainsi la fixation (23) en position d'insertion de la fixation (23).

7. Moteur électrique selon l'une des revendications précédentes, caractérisé en ce que le commutateur de sécurité calorifuge (21) peut être pressé contre la bobine au moyen d'une ligature de câble (65) entourant la fixation (23) et la tête de bobine (19).

8. Moteur électrique selon la revendication 7, caractérisé en ce que la fixation (23) présente des moyens de guidage et de blocage pour la ligature de câble (65) du type collier.

9. Moteur électrique selon la revendication 8, caractérisé en ce que les moyens de guidage se composent de nervures de guidage (69, 71) disposées à l'extrémité supérieure libre de la surface externe (67) de la languette élastique (39) et d'une rainure de guidage (73) ménagée dans la surface de fond de la traverse (47) de la fixation (23).

10. Moteur électrique selon la revendication 9, caractérisé en ce que les nervures de guidage (69, 71) sont disposées au point de passage de la surface externe (67) à la surface frontale (75) de la languette élastique (39).
